# EUROPÄISCHE PATENTSCHRIFT

(11) **EP 1 528 187 B1**
(45) Veröffentlichungstag und Bekanntmachung des Hinweises auf die Patenterteilung: **26.03.2008**
(21) Anmeldenummer: 04450195.5
(22) Anmeldetag: 27.10.2004
(51) Int. Cl.: E04H 9/14

(54) **Hochwasserschutz**
High-water protection
Protection contre les crues

(30) Priorität: 27.10.2003 AT 74103 U
(43) Veröffentlichungstag der Anmeldung: 04.05.2005
(73) Patentinhaber: AQUAFIT Hochwasserschutz GmbH, 1030 Wien (AT)
(72) Erfinder: Lerchbaumer, Dieter, Dr., 9800 Spittal an der Drau (AT)
(74) Vertreter: KLIMENT & HENHAPEL

(56) Entgegenhaltungen:
- WO-A-02/44502
- DE-U- 20 217 435
- GB-A- 2 379 948
- US-A- 4 425 744

## Beschreibung

Die vorliegende Erfindung bezieht sich auf eine Hochwasserschutzvorrichtung zum wasserdichten Abdichten eines Gebäudes gegen Hochwasser gemäß Oberbegriff des Anspruchs 1.

Durch klimatische Veränderungen einerseits und Eingriffe in die natürliche Regulation von Gewässerläufen kommt es vermehrt zu Überschwemmungen von Siedlungsgebieten. Nicht selten kommt es dabei vor, dass die entstehenden Hochwasser ganze Häuser fortspülen bzw. bis in die oberen Stockwerke überfluten.

Konventionelle Hochwasserbarrieren wie Sandsäcke sind hier nicht mehr ausreichend, die vollkommene Verwüstung der Häuser zu verhindern.

Man ist daher dazu übergegangen alternative Hochwasserbarrieren zu entwickeln, wie beispielsweise massive Konstruktionen aus Stahlplatten, Abdichtungseinbauten für Gebäudeöffnungen, hochklappbare Bürgersteige oder wassergefüllte Schläuche, welche das Eindringen von Wasser in die zu schützenden Bereiche verhindern soll.

Auch aus der DE 44 00 870 A1 ist ein System zum Hochwasserschutz von Gebäuden bekannt. Dabei ist eine vor dem Haus fix im Boden verlegte Rinne vorgesehen, in welcher eine Folie gelagert ist, die an der Gebäudewand hochgezogen und befestigt werden kann. Problematisch dabei ist jedoch die Tatsache, dass die Folie vor dem Gebäude im Boden befestigt ist und durch den hydrostatischen Druck bei ansteigendem Wasser unterspült werden kann und somit das Wasser unter der Barriere in den zu schützenden Bereich eindringen kann.

Aus der US 4,693,042sowie der WO 02/44502 A1 ist es weiters bekannt, eine Folie in einem an einem oder vor einem Gebäudeunterbau befestigten Behälter zu lagern und bei Bedarf entlang der Hausmauer hochzuziehen und an dieser zu befestigen. Es ist jedoch kein wasserdichter Gebäudeunterbau vorhanden, so dass die Problematik der Unterspülung durch das dort vorgeschlagene System nicht beseitigt werden kann. Weiters erfordert das dort offenbarte System ein an der Gebäudemauer oder am Unterbau angeordnetes Gehäuse, in welchem die Folie gelagert ist und mittels gegeneinander zu klemmenden Platten befestigt ist. Die Befestigung der Folie am Gebäude ist somit sehr aufwendig und erfordert viel Zeit, weshalb nach einmaliger Montage die Folie im befestigten Zustand am Haus im Gehäuse verbleibt. Nachteilig erweist sich auch die Tatsache, dass das dort offenbarte System nur mit großem Aufwand an bestehende Gebäude befestigt werden kann, relativ viel Platz verbraucht, der in vielen Fällen nicht vorhanden ist und optisch nicht schön anzusehen ist. Dokument WO 02/44502A1 offenbart die Merkmale des Oberbegriffes des Anspruchs 1.

Aus der US 4,425,744 A ist es bekannt Folien direkt an der Gebäudemauer zu lagern und zu befestigen, wodurch diese dadurch die Dichtheit möglicherweise beeinträchtigenden Umwelteinflüssen ausgesetzt werden.

Es ist daher die Aufgabe der vorliegenden Erfindung eine Hochwasserschutzvorrichtung der eingangs erwähnten Art zu schaffen, welches absolut wasserdicht ist und die Gefahr von Unterspülungen vollkommen ausschließt, welches leicht in bestehende Gebäude integriert werden kann, schnell auf- und abbaubar ist und optisch kaum auffällt.

Erfindungsgemäß wird dies durch die kennzeichnenden Merkmale des Anspruchs 1 erreicht. Durch die Verwirklichung eines wasserdichten Schnellverschlusses kann eine extern, beispielsweise im Keller oder bei einer auf Hochwasserschutz spezialisierten Firma gelagerte Folie entlang einer Seite schnell, sicher und wasserdicht mit dem Befestigungselement, welches wiederum am Gebäude selbst befestigt ist, verbunden werden. Die gegenüberliegende Seite kann dann in einer bestimmten Höhe, die auf das höchste zu erwartende Hochwasser abgestimmt ist, befestigt werden. Eine Unterspülung der Hochwasserschutzvorrichtung ist aufgrund des wasserdichten Systems Gebäudeunterbau-Befestigungselement-Schnellverschluss-Folie nicht möglich. Um die Wasserdichtheit zu gewährleisten sind sowohl am Befestigungselement als auch an der Folie eine zusätzliche Dichtlippe oder eine Dichtfläche vorgesehen, die im geschlossenen Zustand des Schnellverschlusses miteinander abdichten bzw. wird die Folie zwischen den korrespondierenden Schnellverschlüssen geklemmt.

Bei besonders breiten Gebäuden ist es sinnvoll mehrere Folien nebeneinander zu verwenden, die gemäß kennzeichnendem Teil des Anspruchs 2 ebenfalls über wasserdichte Schnellverschlüsse miteinander verbunden sind.

Gemäß den Merkmalen des Anspruchs 3 handelt es sich bei den Schnellverschlüssen bevorzugterweise um Reißverschlüsse.

Die kennzeichnenden Merkmale des Anspruchs 4 beschreiben eine alternative Ausführungsform des Schnellverschlusses als Klettverschluss, wobei gemäß kennzeichnenden Merkmalen des Anspruchs 5 jeweils zwei parallel und beabstandet zueinander angeordnete Klettverschlussstreifen entlang der Abschlusskante des Befestigungselements und entlang mindestens einer Abschlusskante der Folie angeordnet sind und zwischen den Klettverschlussstreifen ein Dichtelement vorgesehen ist.

Die kennzeichnenden Merkmale des Anspruchs 6 beschreiben eine weitere alternative Ausführungsform des Schnellverschlusses als Dichtlippenverschluss.

Gemäß den kennzeichnenden Merkmalen des Anspruchs 7 ist die Folie mit einer Abschlussleiste versehen, die in an entlang der Hausmauer angeordneten weiteren Befestigungselementen einhängbar ist.

Die kennzeichnenden Merkmale der Ansprüche 8 und 9 beschreiben eine Möglichkeit der Befestigung des Befestigungselementes am wasserdichten Unterbau der Gebäudemauer. Diese Möglichkeit ist einfach und kann sehr schnell in bestehende Mauern implementiert werden ohne optisch aufzufallen.

Die Ansprüche 10 bis 12 beschreiben besonders bevorzugte Ausführungvarianten zur Klemmung der Folie.

Im Anschluss erfolgt nun eine detaillierte Beschreibung der Erfindung anhand von Zeichnungen. Dabei zeigt:
- Fig.1: eine schematische Schnittansicht der Erfindung
- Fig.2: eine schematische Gesamtansicht eines wasserdicht verpackten Gebäudes
- Fig.3: eine schematische Ansicht der erfindungsgemäßen Hochwassersehutzvorrichtung mit einem Reißverschluss als Schnellverschluss
- Fig.4: eine schematische Ansicht der erfindungsgemäßen Hochwasserschutzvorrichtung mit einem Klettverschluss als Schnellverschluss
- Fig.5: eine schematische Ansicht der erfindungsgemäßen Hochwasserschutzvorrichtung mit einem Dichtlippenverschluss als Schnellverschluss
- Fig. 6: eine schematische Ansicht der erfindungsgemäßen Hochwasserschutzvorrichtung mit einer Halteleiste und einer Klemmleiste
- Fig. 7: eine schematische Ansicht der erfindungsgemäßen Hochwasserschutzvorrichtung mit einem Rohr und einem in das Rohr einsetzbaren Formkörper
- Fig. 8: eine schematische Ansicht der erfindungsgemäßen Hochwasserschutzvorrichtung mit einem Dichtlippenverschluss mithilfe eines Klemmkörpers

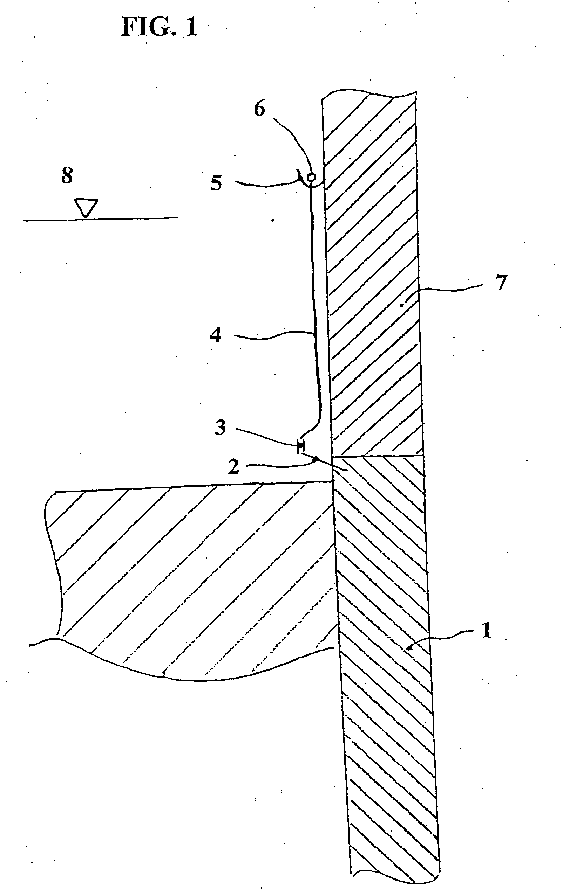

Fig.1 zeigt eine schematische Schnittansicht einer Gebäudemauer mit einem Unterbau 1 und einer Gebäudewand 7. Der Unterbau 1 ist mit einem Befestigungselement 2, vorzugsweise einem Kunststoffteil beispielsweise einer Folie verbunden. Die Verbindung erfolgt bevorzugterweise durch Einkleben des Kunststoffteils in eine im Unterbau 1 angefertigte kleine Nut. Der Kunststoffteil 2 ist mit einem Schnellverschluss 3a versehen.

Eine weitere Folie 4 ist mit einem korrespondierendem Schnellverschluss 3b versehen und kann im Bedarfsfall mit dem Schnellverschluss 3a des Kunststoffteils 2 verbunden werden. Die Folie 4 wird dabei bis zur erforderlichen Abdichtungshöhe 8 an der Gebäudemauer 7 hochgezogen und dort an an der Gebäudemauer 7 angeordneten weiteren Befestigungselementen 5 eingehängt. Zu diesem Zweck ist die Folie 4 mit einer Abschlussleiste 6 versehen, die in die Befestigungselemente 5 eingehängt werden kann.

Im Hochwasserfall kann die Folie 4 von einem externen Ort geholt werden und sehr schnell mit dem bereits am Haus befestigten Schnellverschluss 3a verbunden werden und in die an der Gebäudemauer 7 angeordneten Befestigungselemente 5 eingehängt werden.

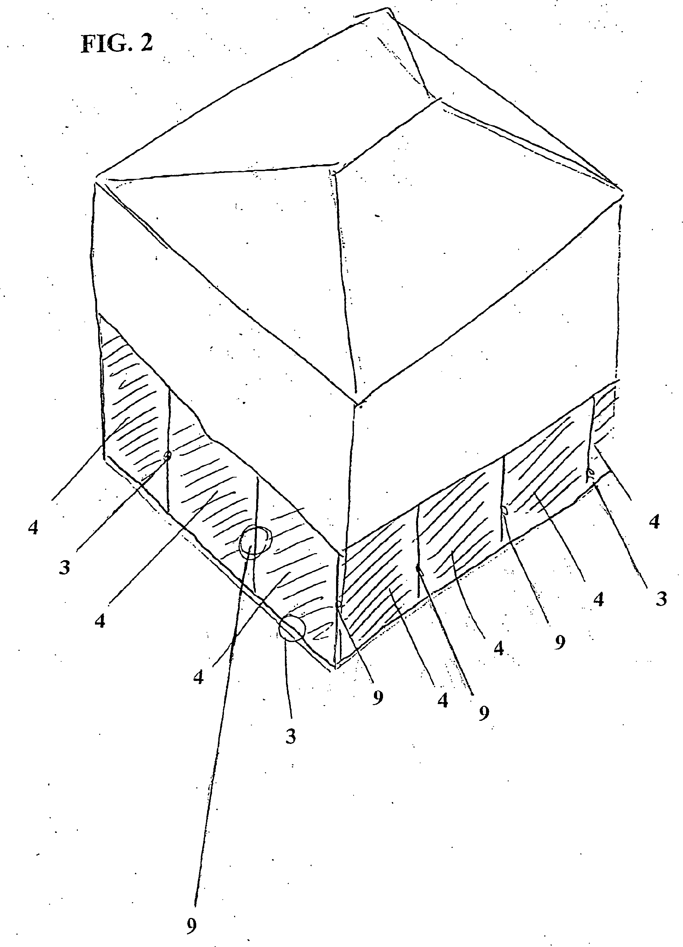

Wie aus Fig.2 ersichtlich, sind zur lückenlosen Abdichtung eines Gebäudes mehrere Folien 4 nebeneinander erforderlich. Die Folien 4 sind dabei untereinander ebenfalls durch einen Schnellverschluss 9 miteinander verbunden.

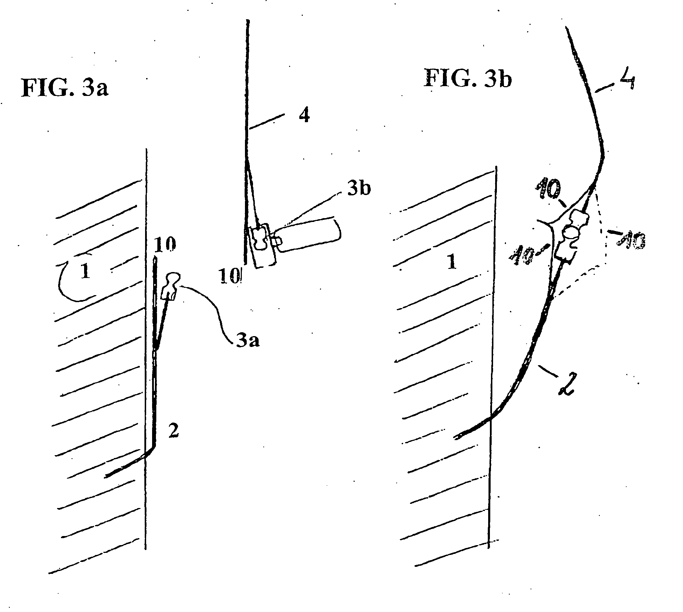

Fig.3 zeigt eine schematische Ansicht der erfindungsgemäßen Hochwasserschutzvorrichtung mit einem Reißverschluss als Schnellverschluss 3. Zusätzlich sind Dichtleisten 10 vorgesehen, welche beim Schließen des Reißverschlusses 3 wasserdicht aneinandergepresst werden. Alternativ können die Dichtleisten 10 auch noch mit einem zusätzlichen Klettverschluss versehen sein. Die Dichtleisten 10 können sowohl hinter dem Reißverschluss 3 als auch davor, dh. auf der Wasserseite angeordnet sein, wie dies in Fig. 3b strichliert eingezeichnet ist.

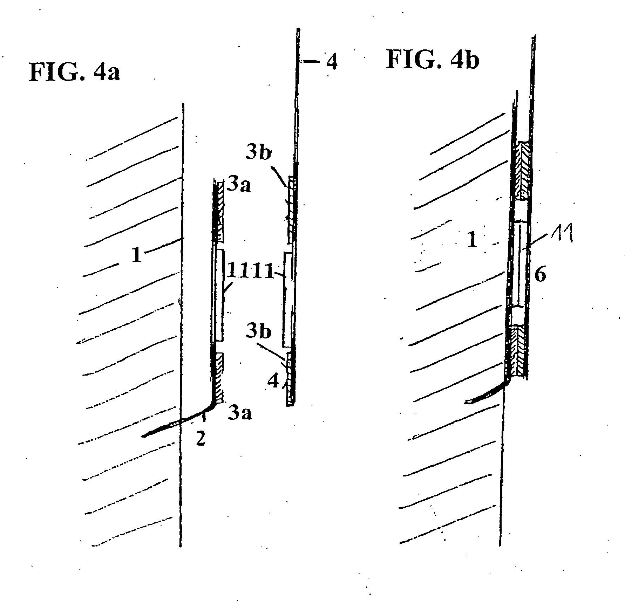

Fig.4 zeigt eine schematische Ansicht der erfindungsgemäßen Hochwasserschutzvorrichtung mit einem Klettverschluss als Schnellverschluss 3. Dabei sind Klettverschlussstreifen 3a und 3b entlang der freien Abschlusskante des Befestigungselementes 2 und zumindest einer Abschlusskante der Folie 4 parallel zu diesen und mit einem Abstand zueinander angeordnet. Zwischen den Klettverschlussstreifen 3a und 3b sind Dichtflächen 11 angeordnet, die beim Verschließen der Klettverschlussstreifen 3a und 3b dicht aneinandergepresst werden und so das Eindringen von Wasser verhindern.

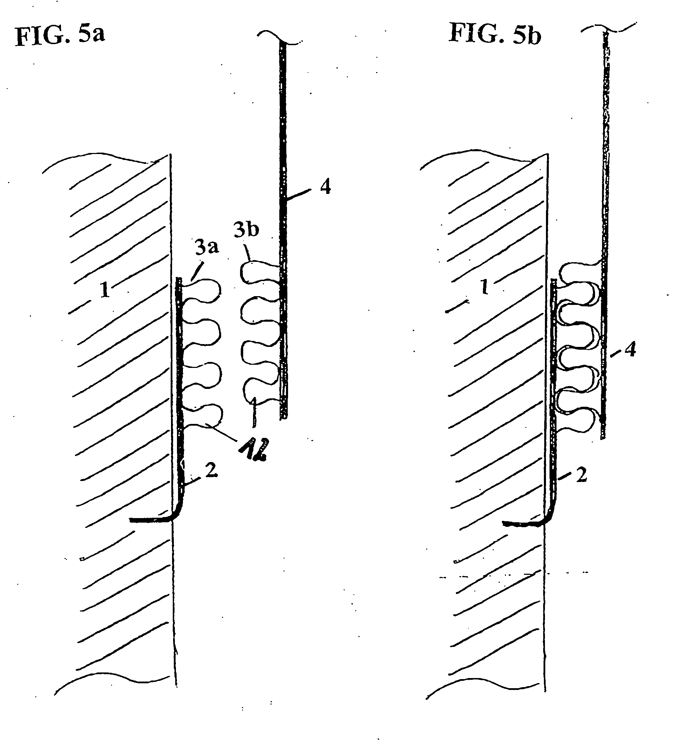

Fig.5 zeigt eine schematische Ansicht der erfindungsgemäßen Hochwasserschutzvorrichtung mit einem Dichtlippenverschluss als Schnellverschluss 3. Dichtlippen 12 sind dabei entlang der freien Abschlusskante des Befestigungselementes 2 und zumindest einer Abschlusskante der Folie 4 parallel zu diesen angeordnet. Die Dichtlippen 12 sind dabei voneinander beabstandet angeordnet, so dass die Dichtlippen 12 des jeweils anderen Elementes, Folie 4 oder Befestigungselement 2 formschlüssig in diese Zwischenräume eingreifen können, um eine dichte Verbindung herzustellen.

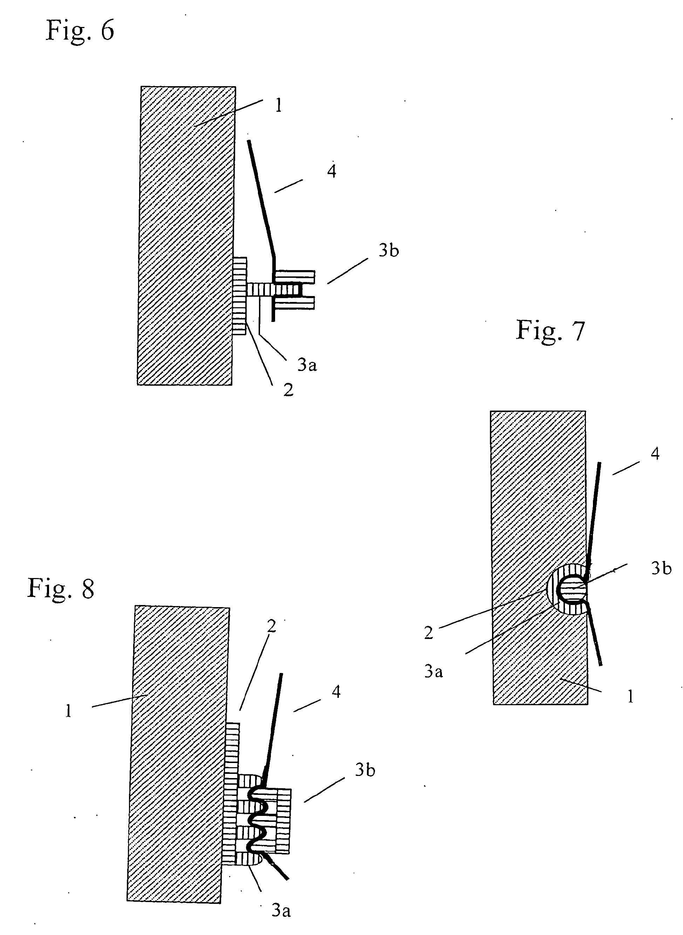

Die Fig. 6 bis 8 zeigen weitere Ausführungsformen des ersten Befestigungselements 2 und des ihm zugeordneten Schnellverschlusses 3a, sowie weitere Beispiele, wie die Folie 4 mit einem korrespondierenden Schnellverschluss 3b versehen sein kann.

Gemäß Fig. 6 ist das erste Befestigungselement 2 als Trägerleiste und der ihm zugeordnete Schnellverschluss 3a als eine von der Trägerleiste seitlich abstehende Halteleiste ausgeführt, wobei der Schnellverschluss 3b der Folie 4 als eine mit der Halteleiste korrespondierende Klemmleiste ausgeführt ist, die in Gebrauchslage die Folie 4 an die Halteleiste anklemmt. Die technische Umsetzung kann selbstverständlich variieren, so können Trägerleiste und Halteleiste auch einteilig ausgeführt sein und gemeinsam ein L-förmiges Profil oder auch, wie in der Fig. 5 dargestellt, ein T-förmiges Profil bilden. Die Halteleiste kann an ihrem freien Ende mit einer kederartigen Verdickung ausgeführt sein, um den Klemmsitz der Klemmleiste zu verbessern. Die Klemmleiste kann wiederum federnd aneinander liegende Klemmschenkel aufweisen, die auf die Halteleiste aufgesteckt werden und in Gebrauchslage die Folie 4 zwischen der Halteleiste und den Klemmschenkeln fixieren.

Gemäß Fig. 7 ist das erste Befestigungselement 2 eine in den wasserdichten Unterbau 1 gefertigte, vorzugsweise gefräste, Nut, und der ihm zugeordnete Schnellverschluss 3a als ein in diese Nut eingesetztes, axial aufgeschlitztes Rohr ausgeführt, wobei der Schnellverschluss 3b der Folie 4 als ein mit dem Rohr korrespondierender, zylindrischer Formkörper aus elastischem Material ausgeführt ist, der in Gebrauchslage durch den axialen Schlitz in das Rohr einsetzbar ist, wo er die Folie 4 an das Rohr anklemmt. Das Rohr kann etwa aus einem Kunststoff gefertigt sein, und der Formkörper aus einem gummiartigen Material, etwa Moosgummi.

Gemäß Fig. 8 weist der dem ersten Befestigungselement 2 zugeordnete Schnellverschluss 3a Dichtlippen auf, und der Schnellverschluss 3b der Folie 4 ist als Klemmkörper mit Dichtlippen ausgeführt, die mit den Dichtlippen des dem ersten Befestigungselement 2 zugeordneten Schnellverschlusses 3a korrespondieren, wobei in Gebrauchslage der Klemmkörper die Folie 4 zwischen die jeweiligen Dichtlippen einklemmt.

## Patentansprüche

1. Hochwasserschutzvorrichtung zum wasserdichten Abdichten eines Gebäudes gegen Hochwasser bestehend aus Folien (4) und einem wasserdichten Unterbau (1) des Gebäudes, wobei die Folien (4) mit dem wasserdichten Unterbau (1) des Gebäudes verbunden sind, **dadurch gekennzeichnet, dass**
• am Unterbau (1) ein wasserdichtes Befestigungselement (2) angeordnet ist, welches einen wasserdichten Schnellverschluss (3a) aufweist und die Folie (4) einerseits mit einem korrespondierenden Schnellverschluss (3b) versehen und mit dem Schnellverschluss (3a) des ersten Befestigungselementes (2) verbindbar ist
• und die Folie andererseits an entlang der Gebäudemauer (7) anzuordnenden weiteren Befestigungsmitteln (5) einhängbar ist
• und dass entweder sowohl an der Folie (4) als auch am Befestigungselement (2) Dichtleisten (10) oder Dichtflächen (11) vorgesehen sind, die bei geschlossenem Schnellverschluss gegeneinander abdichten
• oder die Folie zwischen den korrespondierenden Schnellverschlüssen geklemmt ist.

2. Hochwasserschutzvorrichtung nach Anspruche 1, **dadurch gekennzeichnet, dass** mehrere Folien (4) nebeneinander angeordnet sind und über Schnellverschlüsse (9) miteinander verbindbar sind.

3. Hochwasserschutzvorrichtung nach Anspruch 1 und 2, **dadurch gekennzeichnet, dass** der Schnellverschluss (3) ein Reißverschluss ist.

4. Hochwasserschutzvorrichtung nach Anspruch 1 und 2, **dadurch gekennzeichnet, dass** der Schnellverschluss (3) ein Klettverschluss ist.

5. Hochwasserschutzvorrichtung nach Anspruch 4, **dadurch gekennzeichnet, dass** jeweils zwei parallel und beabstandet zueinander angeordnete Klettverschlussstreifen (3a,3b) entlang der freien Abschlusskante des Befestigungselements (2) und entlang mindestens einer Abschlusskante der Folie (4) angeordnet sind und zwischen den Klettverschlussstreifen (3a,3b) ein Dichtelement (11) vorgesehen ist.

6. Hochwasserschutzvorrichtung nach Anspruch 1 und 2, **dadurch gekennzeichnet, dass** der Schnellverschluss (3) ein Dichtlippenverschluss ist.

7. Hochwasserschutzvorrichtung nach einem der Ansprüche 1 bis 6, **dadurch gekennzeichnet, dass** die Folie (4) mit einer Abschlussleiste (6) versehen ist, welche in die an entlang der Gebäudemauer (7) angeordneten weiteren Befestigungselementen (5) einhängbar ist.

8. Hochwasserschutzvorrichtung nach einem der Ansprüche 1 bis 7, **dadurch gekennzeichnet, dass** das Befestigungselement eine Folie (2) ist, die in einer in den wasserdichten Unterbau (1) gefertigten, vorzugsweise gefrästen, Nut wasserdicht befestigt ist.

9. Hochwasserschutzvorrichtung nach Anspruch 8, **dadurch gekennzeichnet, dass** die Befestigung mittels Kleben erfolgt.

10. Hochwasserschutzvorrichtung nach Anspruch 1 oder 2, **dadurch gekennzeichnet, dass** das Befestigungselement (2) als Trägerleiste und der ihm zugeordnete Schnellverschluss (3a) als eine von der Trägerleiste seitlich abstehende Halteleiste ausgeführt ist, wobei der Schnellverschluss (3b) der Folie (4) als eine mit der Halteleiste korrespondierende Klemmleiste ausgeführt ist, die in Gebrauchslage die Folie (4) an die Halteleiste anklemmt.

11. Hochwasserschutzvorrichtung nach Anspruch 1 oder 2, **dadurch gekennzeichnet, dass** das Befestigungselement (2) eine in den wasserdichten Unterbau (1) gefertigte, vorzugsweise gefräste, Nut ist, und der ihm zugeordnete Schnellverschluss (3a) als ein in diese Nut eingesetztes, axial aufgeschlitztes Rohr ausgeführt ist, wobei der Schnellverschluss (3b) der Folie (4) als ein mit dem Rohr korrespondierender, zylindrischer Formkörper aus elastischem Material ausgeführt ist, der in Gebrauchslage durch den axialen Schlitz in das Rohr einsetzbar ist, wo er die Folie (4) an das Rohr anklemmt.

12. Hochwasserschutzvorrichtung nach Anspruch 1 oder 2, **dadurch gekennzeichnet, dass** der dem Befestigungselement (2) zugeordnete Schnellverschluss (3a) Dichtlippen aufweist, und der Schnellverschluss (3b) der Folie (4) als Klemmkörper mit Dichtlippen ausgeführt ist, die mit den Dichtlippen des dem Befestigungselement (2) zugeordneten Schnellverschlusses (3a) korrespondieren, wobei in Gebrauchslage der Klemmkörper die Folie (4) zwischen die jeweiligen Dichtlippen einklemmt.

## Claims

1. A flood protection device for water-tight sealing of a building against flooding, comprising films (4) and a water-tight foundation (1) of the building, the films (4) being connected to the water-tight foundation (1) of the building, **characterized in that**
- a water-tight fastener (2) is situated on the foundation (1), which has a water-tight quick-acting closure (3a), and the film (4) is provided on one hand with a corresponding quick-acting closure (3b) and is connectable to the quick-acting closure (3a) of the fastener (2)
- and the film is suspendable on the other hand on further fasteners (5) to be situated along the building wall (7),
- and either sealing strips (10) or sealing faces (11), which seal against one another when the quick-acting closure is closed, are provided on both the film (4) and also the fastener (2)
- or the film is clamped between the corresponding quick-acting closures.

2. The flood protection device according to Claim 1, **characterized in that** multiple films (4) are situated adjacent to one another and connectable to one another via quick-acting closures (9).

3. The flood protection device according to Claims 1 and 2, **characterized in that** the quick-acting closure (3) is a zipper closure.

4. The flood protection device according to Claims 1 and 2, **characterized in that** the quick-acting closure (3) is a hook-and-loop closure.

5. The flood protection device according to Claim 4, **characterized in that** two hook-and-loop closure strips (3a, 3b), which are situated parallel and at a distance to one another, are situated along the free terminus edge of the fastener (2) and along at least one terminus edge of the film (4), and a seal element (11) is provided between the hook-and-loop closure strips (3a, 3b).

6. The flood protection device according to Claims 1 and 2, **characterized in that** the quick-acting closure (3) is a sealing lip closure.

7. The flood protection device according to one of Claims 1 through 6, **characterized in that** the film (4) is provided with a terminus strip (6), which is suspendable in the further fasteners (5) situated along the building wall (7).

8. The flood protection device according to one of Claims 1 through 7, **characterized in that** the fastener is a film (2), which is fastened water-tight in a groove which is manufactured, preferably milled, in the water-tight foundation (1).

9. The flood protection device according to Claim 8, **characterized in that** the fastening is performed using gluing.

10. The flood protection device according to Claim 1 or 2, **characterized in that** the fastener (2) is implemented as a carrier strip and the quick-acting closure (3a) assigned thereto is implemented as a retention strip projecting laterally from the carrier strip, the quick-acting closure (3b) of the film (4) being implemented as a clamping strip corresponding to the retention strip, which clamps the film (4) to the retention strip in the usage position.

11. The flood protection device according to Claim 1 or 2, **characterized in that** the fastener (2) is a groove which is manufactured, preferably milled, in the water-tight foundation (1), and the quick-acting closure (3a) assigned thereto is implemented as an axially slotted tube inserted into this groove, the quick-acting closure (3b) of the film (4) being implemented as a cylindrical molded body made of elastic material corresponding to the tube, which is insertable through the axial slot in the tube in the usage position, where it clamps the film (4) against the tube.

12. The flood protection device according to Claim 1 or 2, **characterized in that** the quick-acting closure (3a) assigned to the fastener (2) has sealing lips, and the quick-acting closure (3b) of the film (4) is implemented as a clamping body having sealing lips, which correspond to the sealing lips of the quick-acting closure (3a) assigned to the fastener (2), the clamping body clamping the film (4) between the particular sealing lips in the usage position.

## Revendications

1. Dispositif de protection contre les inondations pour la fermeture étanche à l'eau d'un bâtiment contre les inondations, composé de feuilles (4) et d'une infrastructure étanche à l'eau (1), dans lequel les feuilles (4) sont assemblées avec l'infrastructure étanche à l'eau (1), **caractérisé en ce que** :
- il est prévu disposé sur l'infrastructure (1) un premier élément de fixation (2) étanche à l'eau, qui présente une fermeture rapide (3a) étanche à l'eau, et la feuille (4) est pourvue d'une part d'une fermeture rapide (3b) correspondante et peut être assemblée avec la fermeture rapide (3a) du premier élément de fixation (2),
- et la feuille peut être accrochée d'autre part à d'autres moyens de fixation (5) pouvant être disposés le long des murs (7) du bâtiment,
- et **en ce que** soit sont prévues sur la feuille (4) aussi bien que sur l'élément de fixation (2) des bandes d'étanchéité (10) ou surfaces d'étanchéité (11) qui assurent une étanchéité réciproque lorsque la fermeture rapide est fermée,
- soit la feuille est serrée entre les fermetures rapides qui se correspondent.

2. Dispositif de protection contre les inondations selon la revendication 1, **caractérisé en ce que** plusieurs feuilles (4) sont disposées les unes à côté des autres et peuvent être assemblées entre elles par des fermetures rapides (9).

3. Dispositif de protection contre les inondations selon les revendications 1 et 2, **caractérisé en ce que** la fermeture rapide (3) est une fermeture à glissière.

4. Dispositif de protection contre les inondations selon les revendications 1 et 2, **caractérisé en ce que** la fermeture rapide (3) est une fermeture auto-agrippante.

5. Dispositif de protection contre les inondations selon la revendication 4, **caractérisé en ce que** deux bandes auto-agrippantes (3a, 3b) parallèles et écartées l'une de l'autre sont prévues sur le bord de fermeture libre de chaque élément de fixation (2) et le long d'au moins un bord de fermeture de la feuille (4) et un élément d'étanchéité (11) est prévu entre les bandes auto-agrippantes (3a, 3b).

6. Dispositif de protection contre les inondations selon les revendications 1 et 2, **caractérisé en ce que** la fermeture rapide (3) est une fermeture à lèvres d'étanchéité.

7. Dispositif de protection contre les inondations selon l'une des revendications 1 à 6, **caractérisé en ce que** la feuille (4) est dotée d'une bande de fermeture (6) qui peut être accrochée dans les autres éléments de fixation (5) disposés le long des murs (7) du bâtiment.

8. Dispositif de protection contre les inondations selon l'une des revendications 1 à 7, **caractérisé en ce que** l'élément de fixation est une feuille (2) qui est fixée de manière étanche à l'eau dans une gorge formée, de préférence fraisée, dans l'infrastructure étanche à l'eau (1).

9. Dispositif de protection contre les inondations selon la revendication 8, **caractérisé en ce que** la fixation est réalisée par collage.

10. Dispositif de protection contre les inondations selon la revendication 1 ou 2, **caractérisé en ce que** l'élément de fixation (2) est réalisé comme une bande de support et la fermeture rapide (3a) correspondante comme une bande de maintien dépassant latéralement de la bande de support, la fermeture rapide (3b) de la feuille (4) étant réalisée comme une bande de serrage correspondant à la bande de maintien, qui serre la feuille (4) sur la bande de maintien dans la position d'utilisation.

11. Dispositif de protection contre les inondations selon la revendication 1 ou 2, **caractérisé en ce que** l'élément de fixation (2) est une gorge formée, de préférence fraisée, dans l'infrastructure étanche à l'eau (1), et la fermeture rapide (3a) correspondante est réalisée comme un tube fendu dans le sens axial et introduit dans cette gorge, la fermeture rapide (3b) de la feuille (4) étant réalisée comme un élément mis en forme cylindrique en matériau élastique, correspondant au tube, qui peut être introduit dans la position d'utilisation à travers la fente axiale du tube, où il serre la feuille (4) sur le tube.

12. Dispositif de protection contre les inondations selon la revendication 1 ou 2, **caractérisé en ce que** la fermeture rapide (3a) associée à l'élément de fixation (2) possède des lèvres d'étanchéité, et la fermeture rapide (3b) de la feuille (4) est réalisée comme un élément de serrage avec des lèvres d'étanchéité qui correspondent aux lèvres d'étanchéité de la fermeture rapide (3a) associée à l'élément de fixation (2), l'élément de serrage serrant la feuille (4) entre les lèvres d'étanchéité dans la position d'utilisation.
